# EUROPEAN PATENT SPECIFICATION

(11) **EP 2 998 175 B1**
(45) Date of publication and mention of the grant of the patent: **25.07.2018**
(21) Application number: 14185481.0
(22) Date of filing: 19.09.2014
(51) Int. Cl.: B60T 8/88, B62D 11/08

(54) **Supplemental steering control system**
Zusätzliches Lenksystem
Système de commande de direction supplémentaire

(43) Date of publication of application: 23.03.2016
(73) Proprietor: KNORR-BREMSE Systeme für Nutzfahrzeuge GmbH, 80809 München (DE)
(72) Inventor: Nemeth, Huba, 1116 Budapest (HU); Hecker, Falk, 71706 Markgröningen (DE); Balogh, Levente, 2310 Szigetszentmiklos (HU); Frank, Peter, 1112 Budapest (HU); Palkovics, Laszlo, 1111 Budapest (HU)

(56) References cited:
- EP-A2- 1 894 801
- FR-A1- 2 914 260

## Description

The present invention relates to a supplemental steering control system and, in particular, to a redundancy system for a steering system of commercial vehicles based on braking of individual wheels.

### Background

The control of today's commercial vehicles has reached a level that allows automated driving of the vehicles. In particular, today's compressed air brake systems of commercial vehicles can be operated electronically such that the driver can be omitted from the control loop. Such brake-by-wire systems have pneumatic redundancies (backup systems) to ensure, if the main braking system fails, that a supplemental braking system is available to maintain a secure operation of the vehicle. The backup system is typically deployed by the driver if s/he noticed a failure of the main system. Therefore, a single electronic control circuit is sufficient to ensure a secure operation.

However, in order to operate the vehicle in the above mentioned automatic way a pneumatic backup system is insufficient, since the driver is not available to operate the pneumatic redundant circuit. As consequence, an appropriate electronic redundancy has to be added to operate it in a fault-tolerant way.

Same applies to the steering system, where an increased reliability can be achieved by duplicating the steering actuator(s) and the control system. The resulting steer-by-wire architecture can ensure a fault-tolerant operation.

However, the way of increasing the security by doubling existing systems is costly and adds complexity to the system. As a result the system is potentially less reliable.

FR 2 914 260 A1 discloses a vehicle with a conventional electronic control unit that decelerates using dissymmetrical braking and engine torques on left and right drive wheels of the vehicle during turning.

Therefore, there is a demand for an alternative redundant system and, in particular, for a supplemental steering control system as a backup system.

### Summary of the Invention

The present invention solves the afore-mentioned problems by providing a supplemental steering control system according to claim 1, a steering system according to claim 6 and a commercial vehicle according to claim 9. The dependent claims refer to specifically advantageous realizations of the subject matters of the independent claims.

The present invention relates to a supplemental steering control system for a vehicle. The vehicle comprises a braking system and a main steering system with a positive rolling radius. The braking system is configured to brake individually wheels of the vehicle. The main steering system is configured to steer the vehicle in response to a steering signal (which may be provided by an optional main control module or by a driver). The supplemental steering control system comprises: an error detection module and a control module. The error detection module is configured to detect a malfunction of the main steering system and based thereon to provide an error signal. The control module is configured to receive the error signal and the steering signal, and is further configured, based on the received signals, to generate and to provide a braking signal for the braking system to brake a wheel of the vehicle to thereby steer the vehicle, wherein the control module is configured to generate the braking signal taking into account the positive rolling radius to achieve a same steering effect. The control module is configured to generate the braking signal taking into account the positive rolling radius to achieve a same steering effect.

Therefore, the above-mentioned problem is solved by claim 1 by using the braking system as a supplemental steering system, in particular, for such situations where the main steering system fails or is malfunctioning and a backup system is needed. For example, if the steering system is unable to control the steering actuator(s) correctly, an error signal is issued and upon receiving this error signal the supplemental steering control takes over the steering control by sending a brake signal to the brake system to brake selectively a corresponding wheel. For example, if the vehicle shall turn left indicated by a corresponding "turn-left" steering signal and if an error signal is received by the control module, the control module will generate a brake signal based on the "turn-left" steering signal and may thus brake one or more left wheels to such an extend that the vehicle performs the desired left turn.

Moreover, as along as the steering system functions correctly and no error signal is issued, the supplemental steering system is not deployed (i.e. the control module does not issue a brake signal).

Therefore, in the supplemental steering control system the error detection module may be configured to provide the error signal only if a malfunction of the main steering system is detected and/or to generate the braking signal only if the error signal is received.

Furthermore, the vehicle may be electronically controlled and/or may be configured to implement an automated operation mode, wherein the automated operation mode is a driverless operation mode of the vehicle (i.e. no driver is needed for controlling the vehicle). In the automated operation mode and upon receiving the error signal, the control module may be further configured to take over a control of the steering of the vehicle by controlling the braking system. This may be achieved by providing selectively steering signals to the braking system to brake individual wheels of the vehicle in response to the steering signal.

In yet another supplemental steering control system the braking signal may be indicative of the wheel to be braked. In addition, the control module may be configured to select the wheel to be braked as a wheel of a steered axle. This provides the advantage that the steering by braking is more efficient.

The malfunctioning may also involve a failure of the power supply. To enable nevertheless a backup steering system, the supplemental steering control system may further comprise an emergency power supply, wherein the control module is further configured to activate the emergency power supply if the malfunction involves a power failure of a vehicle power supply.

In further embodiments the control module is configured, upon reception of the error signal, to deactivate the main steering system. This deactivation may involve any active turning off of components or simply to control the main steering system and/or the main control module to ignore any input signal (because the steering is taken over by the braking system). This provides the advantage that main steering system and/or the main control module cannot interfere with the steering functionality provided by the braking system.

In further embodiments the error detection module and the control module are integrated within one control unit.

The present invention relates also to a steering module for a commercial vehicle, wherein the steering module comprises a main steering system, an optional main control module to control a steering of the commercial vehicle, and one of the above-mentioned supplemental steering control system.

In the steering module the main control module may be configured to control the steering electronically and/or pneumatically and/or hydraulically.

In further embodiments the steering system comprises a positive rolling radius. A positive rolling radius makes the steering of the vehicle by braking individual wheel very effective. Contrary to a negative rolling radius, a positive rolling radius amplifies the steering effect. A vehicle with a negative rolling radius would tend to stabilize the alignment with a straight direction (i.e. it acts against the steering direction). For example, braking a left wheel would generate a yaw moment toward the right instead towards the left (as for vehicles with a positive rolling radius). Hence, for a negative rolling radius stronger braking levels are needed to suppress the balancing yaw moment and to perform the desired directional change.

The present invention relates also to a commercial vehicle with one of the above-mentioned steering module. The braking system of the commercial vehicle may comprise a brake system control unit, which includes the error detection module and the control module.

Embodiments of the present invention relate also to a method for steering control of a vehicle such as defined above, i.e. a vehicle including a braking system and a main steering system. The braking system is configured to brake individually wheels of the vehicle and the main steering system is configured to steer the vehicle in response to a steering signal, which may be provided by a main control module or by the driver. The method comprises the following steps: detecting a malfunction of the main steering system; receiving a steering signal; providing an error signal indicative of a detected malfunction; and supplying a braking signal, based on the steering signal, to brake a wheel of the vehicle to thereby steer the vehicle.

In this method the steering signal may be supplied to the supplemental steering control only if a malfunction or a fault has been detected. Therefore, optionally the error detector may also provide a signal for the main control module to indicate that the main control module may cease trying to control the steering system. As a result, the main control module forwards the steering signal to the supplemental steering control system. A different order of the method steps could also be taken without departing from the scope of protections.

This method may also be implemented in software or a computer program product and the order of steps is not important to achieve the desired effect.

### Brief Description of the Drawings

Various embodiments of the present invention will be described in the following by way of examples only, and with respect to the accompanying Figures, in which:
- Fig. 1: depicts a supplemental steering control system according to an embodiment of the present invention; and
- Fig. 2: depicts a method for a supplemental control of the steering system according to an embodiment of the present invention.

### Detailed Description

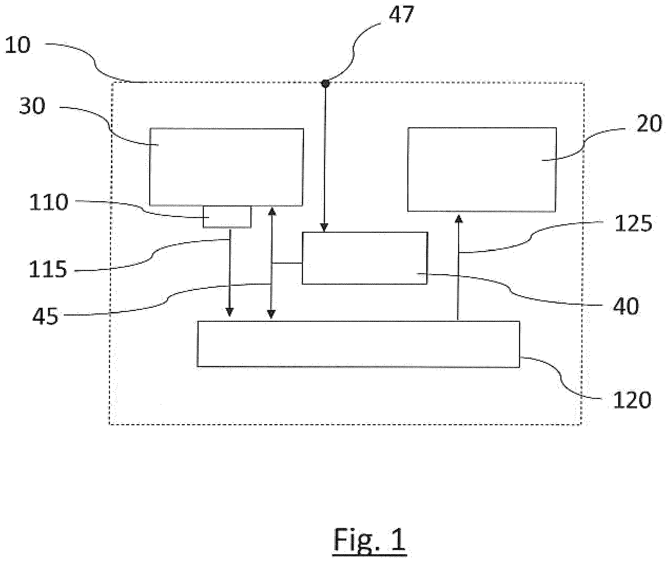

Fig. 1 depicts a supplemental steering control system for a vehicle 10 according to an embodiment of the present invention. The vehicle 10 comprises with a braking system 20, a main steering system 30, and a main control module 40, which controls the main steering system 30. The braking system 20 is configured to decelerate the vehicle by braking individual wheels of the vehicle 10. The main steering system 30 is configured to steer the vehicle 10 in response to a steering signal 45 provided by a main control module 40 or by the driver using a corresponding interface 47 (e.g. a steering wheel).

The supplemental steering control system comprises an error detection module 110 and a control module 120. The error detection module 110 is configured to detect a malfunction of the main steering system 30 and, based thereon, to provide an error signal 115. The error signal 115 can be any signal suitable to indicate the malfunction (or failure). For example, the error signal 115 may be a drop in a voltage signal, i.e. a constant voltage indicates a correctly operating main steering system, whereas a sudden voltage drop signals the malfunction (e.g. a power failure). Other examples for the error signal 115 include a voltage pulse or any change in a frequency or amplitude of a transmitted signal.

The control module 120 is configured to receive the error signal 115 and the steering signal 45. Based on the error signal 115 and the steering signal 45, the control module 120 may generate a braking signal 125. The braking signal 125 is transmitted to the braking system 20 and in response thereto, the braking system 20 brakes one or more wheels of the vehicle 10 to steer the vehicle 10.

The main control module 40 is optional and not mandatory. For example, the braking system 20 may be configured to deactivate the steering system 30 and take over the steering control. Therefore, the afore-mentioned functions provided by the main control module 40 and/or of the control module 120 may be implemented within a brake system control unit as part of the braking system 20. In further embodiments the error detection module 110 and the control module 120 may be integrated within a single control unit which may or may not be part of the brake system control unit. The control module 120 may also be part of the main control module 40 or may be realized as a software module implemented in the main control module 40.

In further embodiments the supplemental steering control system replaces the main steering system 30, because it fails to operate correctly. Therefore, the supplemental steering control system is not a supporting system for main steering system 30 for such situations where the main steering systems does not provide sufficient steering results or if the vehicle tends to get out of control. Instead, embodiments of present invention provide a backup or a replacement system for the main steering system.

Optionally, upon receiving the error signal 115, the control module 120 may deactivate the main steering system to effectively take over the control over the steering (i.e. to avoid any interference).

Although the steering system may be controlled electronically, the present invention provides a steering system redundancy without an explicit redundancy (i.e. without duplicating existing components). Instead, the braking system is used as backup system so that a fault-tolerant brake system provides the steering function by appropriate wheel individual braking. Thus, when the non-redundant steering system would fail, the desired backup is achieved.

As a result embodiments of the present invention can be employed in automatically operating vehicles that need an increased level of reliability and, in particular, for the most safety critical systems of the vehicle: the braking system and the steering system. To meet safety regulations such systems should have appropriate redundancies in the braking and/or steering to ensure a fault-tolerant automated drive operations. The present invention provide the advantage that, even if the main steering system has a failure, no driver is needed to maintain or to recover control within a specified time.

Further embodiments relate to a supplemental steering control unit being implemented in a commercial vehicle, which in view of its weight and a possibly towed trailer should ensure a secure operation, whether it is operated with or without driver (automated mode).

In a preferred operation mode the steering-by-braking is applied on front or steered wheels (which are typically the same wheels), without being limited thereto.

In addition, commercial vehicles typically have a steering geometry with positive rolling radius as opposed to passenger cars which have usually a negative rolling radius. Steering systems with positive rolling radius have the effect that, if an individual braking of wheels is applied to wheels on the steered axle and if different wheel (braking) forces are exerted, the generated internal torque in the steering mechanism further amplifies the steering effect. As a result, a more effective steering is achieved. In other words, a lower braking torque and consequently deceleration is needed to achieve the same steering effect. On the opposite, a steering system with negative rolling radius is inherently stable, when different brake forces apply on both steered wheels. A difference in the brake forces is compensated - at least up to some extent.

It should be appreciated, the effect achieved by the present invention relies on a generation of an appropriate yaw torque that steers the vehicle. For example, the wheel individual braking generates the yaw torque by either braking the front or the rear wheels to have an appropriate torque around the vertical center of gravity of the vehicle. The supplemental steering control system according to embodiments of the present invention may, for example, only be deployed if steering system is not able to steer the vehicle, but not as a yaw torque support to provide a support for the driver's steering angle. Instead, if a breakdown of the steering occurs, it may itself being used for steering. Therefore, in the present invention the individual braking of wheels is used to supplement a not fully functional vehicle to keep the vehicle in a safe state or to bring the vehicle in a desired state. In particular, according to embodiments of the present invention, no feedback or input of the driver is needed. Thus, the present invention is applicable for driverless operation of commercial vehicles.

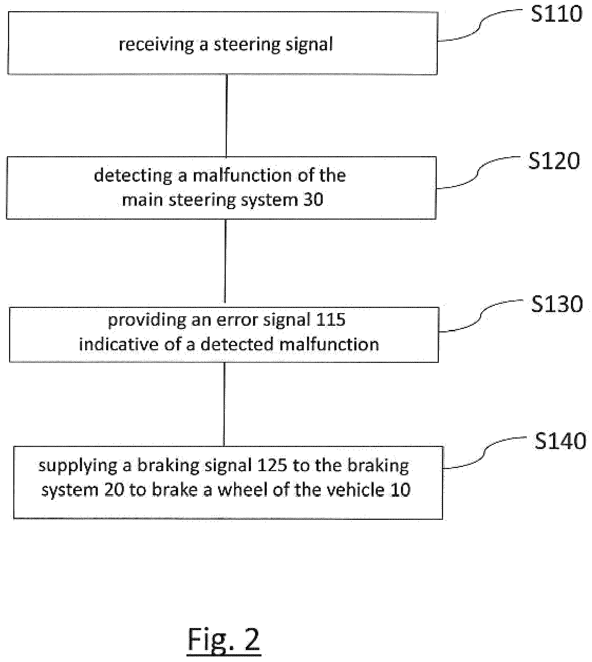

Fig. 2 depicts a method for steering control for a vehicle 10 according to the present invention. Again, the vehicle comprises a braking system 20 and a main steering system 30 which is controlled by a main control module 40. The braking system 20 is configured to brake individually wheels of the vehicle 10. The main steering system 30 is configured to steer the vehicle 10 in response to a steering signal 45 provided by a main control module 40 or by the driver. The method comprises the steps of: detecting S110 a malfunction of the main steering system 30; receiving S120 a steering signal 45; providing S130 an error signal 115 indicative of a detected malfunction; and supplying S140 a braking signal 125, based on the steering signal 45, to the braking system 20 to brake a wheel of the vehicle 10 to thereby steer the vehicle 10. In further embodiments the order of the steps may be different.

This method may also be a computer-implemented method, a person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the a computer or processor.

Further advantageous embodiments of the present invention relate to a commercial vehicle comprising a single circuit electronically controlled steering system and a braking system, which includes appropriate architecture and redundancies to achieve a fail tolerant operation and is characterized in that, in case of a steering system malfunction, the steering functionality is taken over/substituted by the brake system applying wheel individual braking.

In yet another embodiment the commercial vehicle is further characterized in that the wheel individual braking is applied to the steered axle(s) to provide the steering function.

In yet another embodiment the commercial vehicle is further characterized in that the steering system has a positive rolling radius.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

**List of reference signs**

| | |
|---|---|
| vehicle | 10 |
| braking system | 20 |
| main steering system | 30 |
| steering signal | 45 |
| error detection module | 110 |
| error signal | 115 |
| control module | 120 |
| braking signal | 125 |

## Claims

1. A supplemental steering control system for a vehicle (10) with a braking system (20) and a main steering system (30) with a positive rolling radius, the braking system (20) being configured to brake individually wheels of the vehicle (10), the main steering system (30) being configured to steer the vehicle (10) in response to a steering signal (45), the supplemental steering control system comprising:
an error detection module (110) configured to detect a malfunction of the main steering system (30) and based thereon to provide an error signal (115); and
a control module (120) configured to receive the error signal (115) and the steering signal (45), and to generate based on the received steering signal (45) a braking signal (125) and to provide the braking signal (125) for the braking system (20) to brake a wheel of the vehicle (10) to thereby steer the vehicle (10),
**characterized in that**
the control module (120) is configured to generate the braking signal (125) taking into account the positive rolling radius to achieve a same steering effect.

2. The supplemental steering control system according to claim 1, wherein the error detection module (110) is configured to provide the error signal (115) only if a malfunction of the main steering system (30) is detected and/or the control module (120) is configured to generate the braking signal (125) only if the error signal (115) is received.

3. The supplemental steering control system according to claim 1 or claim 2, wherein the vehicle (10) is configured to implement an automated operation mode, the automated operation mode being a driverless operation mode of the vehicle (10),
the control module (120) being further configured, in the automated operation mode and upon receiving the error signal (115), to control the braking system (20) to take over a control of the steering of the vehicle (10) by providing selectively steering signals to the braking system (20) to brake individual wheels of the vehicle (10) in response to the steering signal (45).

4. The supplemental steering control system according to one of the preceding claims, wherein the braking signal (125) is indicative of the wheel to be braked, and wherein the control module (120) is configured to select the wheel to be braked as a wheel of a steered axle.

5. The supplemental steering control system according to one of the preceding claims, further comprising an emergency power supply, wherein the control module (120) is further configured to activate the emergency power supply if the malfunction involves a power failure of a vehicle power supply.

6. The supplemental steering control system according to one of the preceding claims, wherein the control module (120) is further configured, upon reception of the error signal (115), to deactivate the main steering system (30).

7. The supplemental steering control system according to one of the preceding claims, wherein the error detection module (110) and the control module (120) are integrated within one control unit.

8. A steering module for a commercial vehicle (10), the steering module comprising:
a main steering system (30) with a positive rolling radius; and
the supplemental steering control system according to one of the preceding claims.

9. The steering module according to claim 8, wherein the main steering system is controlled electronically and/or pneumatically and/or hydraulically.

10. A commercial vehicle (10) comprising a braking system (20) and a steering module according to claim 8 or claim 9.

11. The commercial vehicle (10) according to claim 10, wherein the braking system (20) comprises a brake system control unit, the brake system control unit comprising the error detection module (110) and the control module (120).

12. A method for steering control for a vehicle (10) with a braking system (20) and a main steering system (30) with a positive rolling radius, the braking system (20) being configured to brake individually wheels of the vehicle (10), the main steering system (30) being configured to steer the vehicle (10) in response to a steering signal (45), the method comprising:
receiving (S110) a steering signal (45);
detecting (S120) a malfunction of the main steering system (30);
providing (S130) an error signal (115) indicative of a detected malfunction; and
supplying (S140) a braking signal (125), based on the steering signal (45), to the braking system (20) to brake a wheel of the vehicle (10) to thereby steer the vehicle (10), and wherein the control module (120) generates the braking signal (125) taking into account the positive rolling radius to achieve a same steering effect.

13. A computer program having a program code which performs the method of claim 12, when the computer program is executed on a computer or processor.

## Patentansprüche

1. Zusätzliches Lenksteuersystem für ein Fahrzeug (10) mit einer Bremsanlage (20) und einer Hauptlenkanlage (30) mit positivem Rollradius, wobei die Bremsanlage (20) zur Einzelbremsung von Rädern des Fahrzeugs (10) und die Hauptlenkanlage (30) zum Lenken des Fahrzeugs (10) auf ein Lenksignal (45) ausgelegt ist, wobei das zusätzliches Lenksteuersystem folgendes umfasst:
ein Fehlererkennungsmodul (110), das zur Erkennung einer Funktionsstörung der Hauptlenkanlage (30) und zur Bereitstellung eines Fehlersignals (115) auf dieser Basis ausgelegt ist; und
ein Steuermodul (120), das zum Empfang des Fehlersignals (115) und des Lenksignals (45) und auf der Basis des empfangenen Lenksignals (45) zur Generierung eines Bremssignals (125) und zur Bereitstellung des Bremssignals (125) an die Bremsanlage (20) zur Bremsung eines Rades des Fahrzeugs (10) und somit zum Lenken des Fahrzeugs (10) ausgelegt ist,
**dadurch gekennzeichnet, dass**
das Steuermodul (120) zur Generierung des Bremssignals (125) unter Berücksichtigung des positiven Rollradius zur Erzielung einer gleichen Lenkwirkung ausgelegt ist.

2. Zusätzliches Lenksteuersystem nach Anspruch 1, wobei das Fehlererkennungsmodul (110) nur dann zur Bereitstellung des Fehlersignals (115) ausgelegt ist, wenn eine Funktionsstörung der Hauptlenkanlage (30) erkannt wird, und/oder wobei das Steuermodul (120) nur dann zur Generierung des Bremssignals (125) ausgelegt ist, wenn das Fehlersignal (115) empfangen wird.

3. Zusätzliches Lenksteuersystem nach Anspruch 1 oder 2, wobei das Fahrzeug (10) zur Implementierung einer automatisierten Betriebsart ausgelegt ist, die eine fahrerlose Betriebsart des Fahrzeugs (10) bildet,
wobei das Steuermodul (120) weiter dazu ausgelegt ist, in der automatisierten Betriebsart und auf Empfang des Fehlersignals (115) die Bremsanlage (20) so zu steuern, dass sie eine Steuerung der Lenkung des Fahrzeugs (10) durch selektive Bereitstellung von Lenksignalen an die Bremsanlage (20) zur Bremsung von Einzelrädern des Fahrzeugs (10) als Reaktion auf das Lenksignal (45) übernimmt.

4. Zusätzliches Lenksteuersystem nach einem der vorhergehenden Ansprüche, wobei das Bremssignal (125) auf das zu bremsende Rad hinweist, und wobei das Steuermodul (120) zur Auswahl des zu bremsenden Rades als Rad einer gelenkten Achse ausgelegt ist.

5. Zusätzliches Lenksteuersystem nach einem der vorhergehenden Ansprüche, weiter umfassend eine Notstromversorgung, wobei das Steuermodul (120) zur Aktivierung der Notstromversorgung ausgelegt ist, wenn die Funktionsstörung einen Ausfall der Fahrzeugstromversorgung umfasst.

6. Zusätzliches Lenksteuersystem nach einem der vorhergehenden Ansprüche, wobei das Steuermodul (120) weiter dazu ausgelegt ist, die Hautlenkanlage (30) auf Empfang des Fehlersignals (115) zu deaktivieren.

7. Zusätzliches Lenksteuersystem nach einem der vorhergehenden Ansprüche, wobei das Fehlererkennungsmodul (110) und das Steuermodul (120) in einem Steuergerät integriert sind.

8. Lenkmodul für ein Nutzfahrzeug (10), wobei das Lenkmodul folgendes umfasst:
eine Hauptlenkanlage (30) mit positivem Rollradius: und
das zusätzliche Lenksteuersystem nach einem der vorhergehenden Ansprüche.

9. Lenkmodul nach Anspruch 8, wobei die Hauptlenkanlage elektronisch und/oder pneumatisch und/oder hydraulisch gesteuert wird.

10. Nutzfahrzeug (10) mit einer Bremsanlage (20) und einem Lenkmodul nach Anspruch 8 oder Anspruch 9.

11. Nutzfahrzeug (10) nach Anspruch 10, wobei die Bremsanlage (20) ein Bremssteuergerät umfasst, welches das Fehlererkennungsmodul (110) und das Steuermodul (120) beinhaltet.

12. Verfahren zur Lenksteuerung für ein Fahrzeug (10) mit einer Bremsanlage (20) und einer Hauptlenkanlage (30) mit positivem Rollradius, wobei die Bremsanlage (20) zur Einzelbremsung von Rädern des Fahrzeugs (10) und die Hauptlenkanlage (30) zum Lenken des Fahrzeugs (10) auf ein Lenksignal (45) ausgelegt ist, wobei das Verfahren Folgendes umfasst:
den Empfang (S110) eines Lenksignals (45);
die Erkennung (S120) einer Funktionsstörung der Hauptlenkanlage (30);
die Bereitstellung (S130) eines eine erkannte Funktionsstörung andeutenden Fehlersignals (115); und
die Abgabe (S140) eines Bremssignals (125) auf der Basis des Lenksignals (45) an die Bremsanlage (20) zum Bremsen eines Rades des Fahrzeugs (10), um das Fahrzeug (10) dadurch zu lenken, wobei das Steuermodul (120) unter Berücksichtigung des positiven Rollradius das Bremssignal (125) zur Erzielung einer gleichen Lenkwirkung generiert.

13. Computerprogramm mit einem Programmcode, der das Verfahren nach Anspruch 12 ausführt, wenn das Computerprogramm auf einem Computer oder Prozessor gefahren wird.

## Revendications

1. Système supplémentaire de commande de direction d'un véhicule (10), ayant un système (20) de freinage et un système (30) principal de direction à rayon de roulement positif, le système (20) de freinage étant configuré pour freiner individuellement des roues du véhicule (10), le système (30) principal de direction étant configuré pour diriger le véhicule (10) en réaction à un signal (45) de direction, le système supplémentaire de commande de direction comprenant :
un module (110) de détection d'erreur, configuré pour déterminer un disfonctionnement du système (30) principal de direction et, sur cette base, pour fournir un signal (115) d'erreur et
un module (120) de commande, configuré pour recevoir le signal (115) d'erreur et le signal (45) de direction et pour produire, sur la base du signal (45) de direction reçu, un signal (125) de freinage et pour fournir le signal (125) de freinage au système (20) de freinage pour freiner une roue du véhicule (10) et ainsi diriger le véhicule (10),
**caractérisé en ce que**
le module (120) de commande est configuré pour produire le signal (125) de freinage en prenant en compte le rayon de roulement positif pour obtenir un même effet de direction.

2. Système supplémentaire de commande de direction suivant la revendication 1, dans lequel le module (110) de détection d'erreur est configuré pour fournir le signal (115) d'erreur seulement si un disfonctionnement du système (30) principal de direction est détecté et/ou le module (120) de commande est configuré pour produire le signal (125) de freinage seulement si le signal (115) d'erreur est reçu.

3. Système supplémentaire de commande de direction suivant la revendication 1 ou la revendication 2, dans lequel le véhicule (10) est configuré pour mettre en oeuvre un mode de fonctionnement automatique, le mode de fonctionnement automatique étant un mode de fonctionnement sans conducteur du véhicule (10),
le module (120) de commande étant configuré, en outre, pour, dans le mode de fonctionnement automatique et après réception du signal (115) d'erreur, commander le système (20) de freinage pour prendre en charge une commande de la direction du véhicule (10) en fournissant sélectivement des signaux de direction au système (20) de freinage pour freiner des roues individuelles du véhicule (10) en réaction au signal (45) de direction.

4. Système supplémentaire de commande de direction suivant l'une quelconque des revendications précédentes, dans lequel le signal (125) de freinage est indicateur de la roue à freiner et dans lequel le module (120) de commande est configuré pour sélectionner la roue à freiner comme roue d'un essieu dirigé.

5. Système supplémentaire de commande de direction suivant l'une quelconque des revendications précédentes, comprenant, en outre, une alimentation en courant de secours, le module (120) de commande étant configuré, en outre, pour activer l'alimentation en courant de secours, si le disfonctionnement implique une panne d'une alimentation en courant du véhicule.

6. Système supplémentaire de commande de direction suivant l'une des revendications précédentes, dans lequel le module (120) de commande est configuré, en outre, pour, après réception du signal (115) d'erreur, désactiver le système (30) principal de direction.

7. Système supplémentaire de commande de direction suivant l'une des revendications précédentes, dans lequel le modèle (110) de détection d'erreur et le module (120) de commande sont intégrés au sein d'une unité de commande.

8. Module de direction d'un véhicule (10) commercial, le module de direction comprenant :
un système (30) principal de direction à rayon de roulement positif et
le système supplémentaire de commande de direction suivant l'une des revendications précédentes.

9. Module de direction suivant la revendication 8, dans lequel le système principal de direction est commandé électroniquement et/ou pneumatiquement et/ou hydrauliquement.

10. Véhicule (10) commercial, comprenant un système (20) de freinage et un module de direction suivant la revendication 8 ou la revendication 9.

11. Véhicule (10) commercial suivant la revendication 10, dans lequel le système (20) de freinage comprend une unité de commande du système de frein, l'unité de commande du système de frein comprenant le module (110) de détection d'erreur et le module (120) de commande.

12. Procédé de commande de direction d'un véhicule (10), ayant un système (20) de freinage et un système (30) principal de direction à rayon de roulement positif, le système (20) de freinage étant configuré pour freiner individuellement des roues du véhicule (10), le système (30) principal de direction étant configuré pour diriger le véhicule (10) en réaction à un signal (45) de direction, le procédé comprenant :
recevoir (S110) un signal (45) de direction;
détecter (S120) un disfonctionnement du système (30) principal de direction;
fournir (S130) un signal (115) d'erreur indicateur d'un disfonctionnement détecté et
fournir (S140) un signal (125) de freinage, sur la base du signal (45) de direction, au système (20) de freinage pour freiner une roue du véhicule (10), afin de diriger ainsi le véhicule (10), et dans lequel le module (120) de commande produit le signal (125) de freinage en prenant en compte le rayon de roulement positif pour obtenir un même effet de direction.

13. Programme d'ordinateur ayant un code de programme, qui effectue le procédé de la revendication 12, lorsque le programme d'ordinateur est exécuté sur un ordinateur ou sur un processeur.
